# EUROPÄISCHE PATENTANMELDUNG

(11) **EP 2 556 989 A1**
(43) Veröffentlichungstag der Anmeldung: **13.02.2013**
(21) Anmeldenummer: 11177274.5
(22) Anmeldetag: 11.08.2011
(51) Int. Cl.: B60L 15/08, B60L 15/20

(54) **Kraftfahrzeug mit Elektromotor**

(71) Anmelder: SIEMENS AKTIENGESELLSCHAFT, 80333 München (DE)
(72) Erfinder: Köpken, Hans-Georg, 91056 Erlangen (DE); Vollmer, Rolf, 36129 Gersfeld (DE)

(57) **Zusammenfassung**

Die Erfindung betrifft ein mit einem Elektromotor (6) angetriebenes Kraftfahrzeug (2). Der Elektromotor (6) ist mittels eines eine Schaltfrequenz (28) aufweisenden Umrichters (24) betrieben, und eine Leistungsabgabe (40) des Umrichters (24) an den Elektromotor (6) ist mittels eines Pedals (34) gesteuert. Das Kraftfahrzeug (2) umfasst einen Wahlhebel (32) zur Umschaltung der Schaltfrequenz (28) zwischen einer ersten Schaltfrequenz (36) und einer zweiten Schaltfrequenz (28) mit einer reduzierten Leistungsabgabe (40).

## Beschreibung

Die Erfindung betrifft ein mit einem Elektromotor angetriebenes Kraftfahrzeug, wobei der Elektromotor mittels eines eine Schaltfrequenz aufweisenden Umrichters betrieben und eine Leistungsabgabe des Umrichters an den Elektromotor mittels eines Pedals gesteuert ist.

Die Geschwindigkeit von elektromotorisch angetriebenen Kraftfahrzeugen wird üblicherweise mit einem Fußpedal gesteuert, dem sogenannten Gaspedal. Hierbei steht das Fußpedal in einer Wirkverbindung zu einem Umrichter, der den zur Fortbewegung des Kraftfahrzeugs verwendeten Elektromotor mittels eines elektrischen Stroms betreibt. Ein vergleichsweise stark niedergedrücktes Fußpedal bewirkt hierbei in der Regel einen verstärkten Energiefluss von dem Umrichter zu dem Elektromotor. Der Umrichter wiederum wird von einem Energiespeicher mit elektrischer Energie versorgt, beispielsweise von einem Akkumulator oder einem an einen Verbrennungsmotor gekoppelten elektrischen Generator.

Der Umrichter weist Leistungshalbleiter auf, die in einer Schaltfrequenz geschaltet werden. Mittels einer vergleichsweise hohen Schaltfrequenz können Verluste minimiert werden, die innerhalb des den Elektromotor und den Umrichter umfassenden Antriebstrangs auftreten. Aufgrund der hohen Schaltfrequenz erwärmen sich jedoch die Leistungshalbleiter vergleichsweise stark, so dass der Umrichter nicht mit dessen maximaler Leistung betrieben werden kann.

Bei einer vergleichsweise geringen Schaltfrequenz kann hingegen die Leistungsabgabe des Umrichters maximal sein. Die geringe Schaltfrequenz bedingt jedoch eine Welligkeit und sogenannte Oberschwingungen in dem elektrischen Strom. Dies führt innerhalb des Elektromotors zu hohen Verlusten, weshalb sich eine Reichweite, also die maximal zurücklegbare Strecke des Kraftfahrzeugs zwischen zwei Ladezyklen des Energiespeichers, stark verringert. Herkömmlicherweise wird bei der Herstellung des Kraftfahrzeugs eine Schaltfrequenz des Umrichters vorgegeben, wobei diese einen für das Kraftfahrzeug spezifischen Kompromiss zwischen der maximalen Leistung und der Reichweite darstellt.

Der Erfindung liegt die Aufgabe zugrunde ein verbessertes Kraftfahrzeug mit einem Elektromotor anzugeben.

Diese Aufgabe wird erfindungsgemäß gelöst durch die Merkmale des Anspruchs 1. Vorteilhafte Weiterbildungen und Ausgestaltungen sind Gegenstand der Unteransprüche.

Das Kraftfahrzeug wird mittels eines Elektromotors bewegt, wobei die durch den Elektromotor erzeugte Kraft auf die einer Achse des Kraftfahrzeugs zugeordneten Räder wirkt. Denkbar wäre auch, dass jedes Rad des Kraftfahrzeugs mit Hilfe jeweils eines Elektromotors angetrieben wird, oder der Elektromotor eine sogenannte Gleiskette oder dergleichen in Bewegung versetzt. Der Elektromotor, welcher geeigneterweise ein Drehstrommotor ist, wird mittels eines Umrichters mit elektrischer Energie in Form eines elektrischen Stroms und einer elektrischen Spannung versorgt. Der Umrichter selbst wird beispielsweise aus einem herkömmlichen Speicher für elektrische Energie wie zum Beispiel einem Akkumulator oder einem Kondensator oder einer Kombination davon gespeist. Ebenfalls denkbar wäre, dass der Umrichter mit einem elektrischen Generator elektrisch verbunden ist, der in einer Wirkverbindung zu einer Verbrennungsmaschine steht. Das Kraftfahrzeug hätte demnach die Konfiguration eines sogenannten seriellen Hybridelektrokraftfahrzeugs.

Eine Leistungsabgabe des Umrichters an den Elektromotor wird durch ein Pedal gesteuert. Das Pedal ist beispielsweise nach Art eines herkömmlichen Gaspedals ausgestaltet und befindet sich in einem etwaigen Fußraum des Kraftfahrzeugs. Insbesondere falls keine Belastung an dem Pedal anliegt beträgt die Leistungsabgabe des Umrichters an den Elektromotor Null. Dahingegen ist vorteilhafterweise die Leistungsabgabe des Umrichters an den Elektromotor maximal, wenn das Pedal maximal betätigt ist.

Der Umrichter weist zumindest einen Leistungshalbleiter auf, über den ein elektrischer Strom zu dem Elektromotor geleitet wird. Beispielsweise ist der Umrichter - je nach Art des Elektromotors - in einer Brückenschaltung mit Brückenzweigen aufgebaut, wobei jeder Brückenzweig mindestens einen Leistungshalbleiter umfasst. Der oder die Leistungshalbleiter werden mit einer Schaltfrequenz angesteuert. Insbesondere werden die Leistungshalbleiter mit Hilfe einer Pulsweitenmodulation betrieben und geeigneterweise bezeichnet die Schaltfrequenz den reziproken Wert der Impulsperiodendauer. Hierbei wird die Leistungsabgabe des Umrichters mittels der jeweiligen Impulsdauer geregelt. Eine kleine Impulsdauer entspricht einer vergleichsweise geringen Leistungsabgabe des Umrichters.

Die Schaltfrequenz ist mittels eines Wahlhebels zwischen einer ersten Schaltfrequenz und einer zweiten Schaltfrequenz umschaltbar. Das Umschalten kann während einer Fahrt des Kraftfahrzeugs oder zumindest während des Betriebs des Kraftfahrzeugs durch einen Fahrer des Kraftfahrzeugs erfolgen. Insbesondere ist die zweite Schaltfrequenz größer als die erste Schaltfrequenz. Hierdurch ist es bei einem Betrieb mit der zweiten Schaltfrequenz möglich, in dem elektrischen Strom vergleichsweise wenige Oberschwingungen oder sonstige Unregelmäßigkeiten zu erzeugen, so dass der Elektromotor vergleichsweise effektiv betrieben werden kann. Der Gesamtwirkungsgrad des Kraftfahrzeugs ist bei der zweiten Schaltfrequenz vergleichsweise hoch und insbesondere maximal. Aufgrund der erhöhten Schaltfrequenz steigt jedoch eine Betriebstemperatur des Umrichters.

Um eine Überhitzung des Umrichters zu vermeiden, ist die Leistungsabgabe bei der zweiten Schaltfrequenz daher geringer als bei der ersten Schaltfrequenz. Dahingegen ist die Erwärmung des Umrichters bei der ersten Schaltfrequenz gering, und somit ist auch eine große Leistungsabgabe möglich, zumindest jedoch eine Leistungsabgabe, die größer ist als diejenige bei der zweiten Schaltfrequenz. Wegen der geringeren Schaltfrequenz ist die Welligkeit in dem elektrischen Strom erhöht und der Wirkungsgrad des Elektromotors verringert.

Sowohl bei der ersten Schaltfrequenz als auch bei der zweiten Schaltfrequenz steht der gesamte Verstellweg des Pedals dem Fahrer zur Einstellung der Beschleunigung und/oder der Geschwindigkeit des Kraftfahrzeugs zur Verfügung, welche somit vergleichsweise genau erfolgen kann. Hierbei ist bei einem vollständig betätigten Pedal bei der ersten Schaltfrequenz die Leistungsabgabe des Umrichters geringer als bei einem vollständig betätigten Pedal bei der zweiten Schaltfrequenz.

In einer geeigneten Ausführungsform der Erfindung beträgt die erste Schaltfrequenz zwischen 3kHz und 5kHz und besonders geeignet 4kHz. Vorteilhafterweise ist der Umrichter und/oder der Elektromotor darauf ausgelegt, bei dieser Schaltfrequenz die baulich bedingte maximale Leistung abzugeben.

Zweckmäßigerweise beträgt die zweite Schaltfrequenz das Vierfache der ersten Schaltfrequenz. Vorteilhafterweise liegt die zweite Schaltfrequenz zwischen 13kHz und 19kHz und ist insbesondere 16kHz. Beispielsweise sind bei dieser zweiten Schaltfrequenz die Verluste, die innerhalb des Elektromotors entstehen, möglichst gering und eine Welligkeit innerhalb des dem Elektromotor zugeführten elektrischen Stroms ist vergleichsweise gering.

Zweckmäßigerweise wird die Schaltfrequenz reduziert, wenn die Betriebstemperatur des Umrichters eine Temperaturschwelle überschreitet. Auf diese Weise wird die Anzahl von Schaltvorgängen der einzelnen Leistungshalbleiter des Umrichters verringert. Somit entstehen dort weniger Schaltverluste, die die Leistungshalbleiter erhitzen. Vielmehr kühlen sich die Leistungshalbleiter während des Betriebs wieder auf ein Maß ab, welches einen sicheren Betrieb des Kraftfahrzeugs zulässt. Insbesondere wird die Schaltfrequenz auf die erste Schaltfrequenz umgeschaltet, wenn die Temperaturschwelle erreicht wird und der Umrichter ursprünglich mit der zweiten Schaltfrequenz betrieben wurde.

Der Wahlhebel ist beispielsweise entweder mit einer direkten Datenleitung oder bevorzugt über ein Bussystem mit dem Umrichter verbunden. Das Bussystem ist beispielsweise ein CAN- oder LIN-Bussystem. Vorteilhafterweise ist ebenfalls das Pedal mit dem Bussystem verbunden und das Bussystem ist das Hauptbussystem des Kraftfahrzeugs. Somit ist die Anzahl von physischen Datenleitungen innerhalb des Kraftfahrzeugs reduziert, was sowohl eine kostengünstige Fertigung des Kraftfahrzeugs zulässt als auch zu einem vergleichsweise geringen Gewicht des Kraftfahrzeugs führt.

Insbesondere ist mittels des Wahlhebels neben der Schaltfrequenz auch eine Bewegungsrichtung des Kraftfahrzeugs einstellbar. Hierfür wird zum Beispiel der Wahlhebel in unterschiedliche Positionen bewegt, wobei jede Position eine Kombination aus einer der Bewegungsrichtungen und einer der Schaltfrequenz repräsentiert, oder mittels Antippen des Wahlhebels werden die einzelnen Kombinationen sukzessive durchgeschaltet. Zum Beispiel kann mittels des Wahlhebels sowohl bei einer Vorwärtsfahrt als auch bei einer Rückwärtsfahrt zwischen der ersten und der zweiten Schaltfrequenz umgeschaltet werden. Da im Normalfall das Kraftfahrzeug vorwiegend vorwärts bewegt wird, ist geeigneterweise jedoch die Umschaltung lediglich bei der Vorwärtsfahrt des Kraftfahrzeugs möglich. Hierbei wird der Umrichter bei der Rückwärtsfahrt insbesondere mit der ersten Schaltfrequenz betrieben.

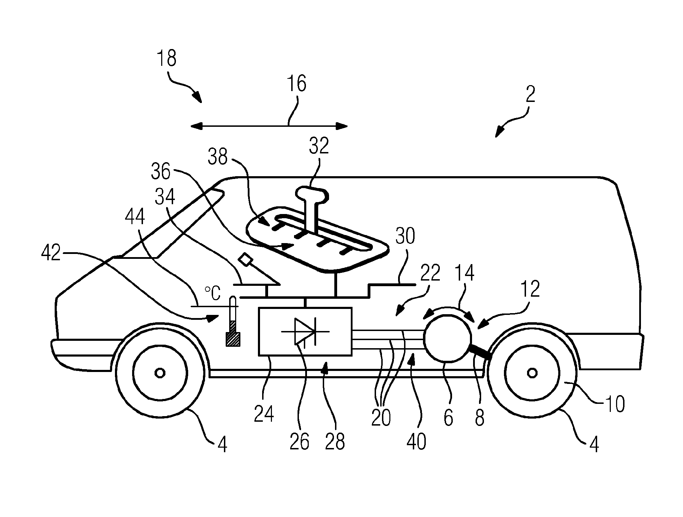

Nachfolgend wird ein Ausführungsbeispiel der Erfindung anhand einer Zeichnung näher erläutert. Darin zeigt die einzige Figur schematisch ein Kraftfahrzeug mit einem erfindungsgemäßen Schaltfrequenz-Wahlhebel.

In der Figur ist schematisch ein Kraftfahrzeug 2 mit einer Anzahl von Rädern 4 und mit einem Elektromotor 6 dargestellt, der in einer Wirkverbindung 8 zu den Rädern 4 steht, die einer Hinterachse 10 zugeordnet sind. Die Wirkverbindung 8 ist beispielsweise ein Getriebe oder ein Riemen und derart, dass sowohl eine Drehzahl 12 als auch eine Drehrichtung 14 des Elektromotors 6 auf die Räder 4 übertragen wird. Die Drehrichtung 14 gibt somit eine Bewegungsrichtung 16 des Kraftfahrzeugs 2 und die Drehzahl 12 eine Geschwindigkeit 18 des Kraftfahrzeugs 2 an.

Der Elektromotor 6 ist ein Drehstrommotor mit Elektromagneten, von denen jeder mit einem Leiter 20 elektrisch verbunden ist. Die Leiter 20 sind zu einer elektrischen Leitung oder einem elektrischen Kabel 22 zusammengefasst, welches wiederum an einen Umrichter 24 angeschlossen ist. Der Umrichter 24 umfasst eine Anzahl von mit den Leitern 20 elektrisch verbunden Halbleiterbauelementen 26, beispielsweise Thyristoren, die in einer Schaltfrequenz 28 angesteuert werden.

Der Umrichter 24 ist an ein Bussystem 30 angeschlossen, welches ein CAN-Bussystem ist und das Hauptbussystem des Kraftfahrzeugs 2 darstellt. Beispielsweise sind eine Klimaanlage und etwaige Türsteuergeräte mit dem Bussystem 30 verbunden. Ebenfalls an das Bussystem 30 angeschlossen ist ein Wahlhebel 32 in Form eines Handhebels, der in eine Anzahl von Positionen bewegt werden kann, und ein Pedal 34, welches nach Art eines herkömmlichen Gaspedals ausgestaltet ist.

Bei Betrieb des Kraftfahrzeugs 2 wird mittels des Wahlhebels 32 die Bewegungsrichtung 16 des Kraftfahrzeugs 2 eingestellt. Hierfür wird ein Signal über das Bussystem 30 von dem Wahlhebel 32 an den Umrichter 24 gesandt, welche Halbleiterbauelemente 26 und/oder in welcher Reihenfolge diese angesteuert werden. Die Reihenfolge, in der die Halbleiterbauelemente 26 bestromt werden, führt zu einem alternierenden Stromfluss über die Leiter 20 der elektrischen Leitung 22 und somit zu einer abwechselnden, zu der Reihenfolge korrespondierenden Bestromung der Elektromagnete des Elektromotors 6. Somit wird mittels der Reihenfolge die Drehrichtung 14 des Elektromotors 6 bestimmt.

In dem Signal ist ebenfalls enthalten, ob die Schaltfrequenz 28 der Halbleiterbauelemente 26 auf eine erste Schaltfrequenz 36 oder auf eine zweite Schaltfrequenz 38 gesetzt wird, wobei die erste Schaltfrequenz 36 4kHz und die zweite Schaltfrequenz 38 16kHz beträgt. Die erste Schaltfrequenz 36 steht hierbei sowohl bei einer Vorwärtsfahrt des Kraftfahrzeugs 2 als auch bei einer Rückwärtsfahrt des Kraftfahrzeugs 2 zur Verfügung. Die zweite Schaltfrequenz 38 ist lediglich bei einer Vorwärtsfahrt des Kraftfahrzeugs 2 auswählbar. Mit anderen Worten existieren zwei Positionen, in die der Wahlhebel 32 bewegt werden kann, und die zu einer Vorwärtsfahrt des Kraftfahrzeugs 2 führen, jedoch nur eine Position, die zu einer Rückwärtsfahrt führt.

Mit dem Pedal 34 wird eine Leistungsabgabe 40 des Umrichters 24 an den Elektromotor 6 gesteuert. Wird das Pedal 34 vergleichsweise gering betätigt, so ist die Leistungsabgabe 40 gering, was zu einer geringen Drehzahl 12 des Elektromotors 6 und somit zu einer vergleichsweise kleinen Geschwindigkeit 18 des Kraftfahrzeugs 2 führt. Wird das Pedal 34 vollständig betätigt, so ist die Leistungsabgabe 40 des Umrichters 24 an den Elektromotor 6 maximal. Hierbei wird die maximale Leistungsabgabe 40 durch die Schaltfrequenz 28 vorgegeben.

Bei der zweiten Schaltfrequenz 38 werden die Halbleiterbauelemente 26 vergleichsweise häufig betätigt, so dass der über die Leiter 20 fließende elektrische Strom im Wesentlichen einen sinusförmigen Verlauf aufweist. Dieser führt in dem als Drehstrommaschine ausgeführten Elektromotor 6 zu vergleichsweise geringen Verlusten. Dahingegen ist der Stromverlauf bei der ersten Schaltfrequenz 36 unregelmäßiger und mit Oberschwingungen belastet. Dies führt zu Verlusten innerhalb des Elektromotors 6 und daher zu einem geringeren Wirkungsgrad. Der mit dem Umrichter 24 verbundene Energiespeicher wird daher relativ schnell erschöpft, was sich in einer vergleichsweise geringen Reichweite des Kraftfahrzeugs niederschlägt.

Die relativ häufige Betätigung der Halbleiterbauelemente 26 bei der zweiten Schaltfrequenz 38 bedingt jedoch eine im Vergleich zu einer Betätigung mit der ersten Schaltfrequenz 36 größere Erhitzung der Halbleiterbauelemente 26. Daher ist die Leistungsabgabe 40 des Umrichters 24 bei der zweiten Schaltfrequenz 38 im Vergleich zu der bei der ersten Schaltfrequenz 26 reduziert. Aufgrund der Reduzierung der Leistungsabgabe 40 ist der Stromfluss durch den Umrichter 24 geringer und somit auch dessen Erwärmung.

Aufgrund der reduzierten Leistungsabgabe 40 bei der zweiten Schaltfrequenz 38 ist die Reichweite des Kraftfahrzeugs deutlich erhöht. Sollte ein Fahrer jedoch eine hohe Leistungsanforderung an das Kraftfahrzeug 2 haben, beispielsweise bei einem Überhohlvorgang oder einer Bergfahrt, so kann dieser mittels des Wahlhebel 32 die Schaltfrequenz 28 auf die erste Schaltfrequenz 36 reduzieren und somit die maximale Leistungsabgabe 40 erhöhen.

Insbesondere schaltet der Fahrer bereits vor dem Überhohlvorgang eines langsam fahrenden Hindernisses die Schaltfrequenz 28 um, und wartet bis sich eine Möglichkeit zum Überhohlen des Hindernisses bietet. Bis dahin steuert der Fahrer die Geschwindigkeit 18 des Kraftfahrzeugs mit dem Pedal 34 derart, dass das Kraftfahrzeug 2 mit einem im Wesentlichen konstanten Abstand hinter dem Hindernis herfährt. Während des Überhohlvorgangs betätigt der Fahrer das Pedal 34 vollständig, so dass die Leistungsabgabe 40 des Umrichters 24 an den Elektromotor 6 am größten ist. Dies führt zu einer vergleichsweise großen Beschleunigung und somit einer großen Geschwindigkeit 18 des Kraftfahrzeugs 2, weshalb der Überhohlvorgang zügig abgeschlossen ist. Nach Beenden des Überhohlvorgangs schalltet der Fahrer die Schaltfrequenz 28 erneut auf die zweite Schaltfrequenz 38, damit der Energieverbrauch des Kraftfahrzeugs 2 möglichst gering und dessen Reichweite daher möglichst groß ist.

Sowohl bei der ersten Schaltfrequenz 26 als auch bei der zweiten Schaltfrequenz 38 steht dem Fahrer der gesamte Verstellweg des Pedals 34 zur Verfügung, so dass der Fahrer die Geschwindigkeit 18 des Kraftfahrzeugs 2 möglichst genau justieren kann.

Das vergleichsweise häufige Betätigen der Halbleiterbauelemente 26, insbesondere bei der zweiten Schaltfrequenz 38, erhöht eine Betriebstemperatur 42 des Umrichters 24. Überschreitet diese eine Temperaturschwelle 44, so wird unabhängig von der mittels des Wahlhebels 32 ausgesuchten Schaltfrequenz 28 diese reduziert. Ist beispielsweise mittels des Wahlhebels 32 die zweite Schaltfrequenz 38 vorgegeben und erreicht die Betriebstemperatur 42 die Temperaturschwelle 44, so schaltet der Umrichter 24 selbstständig die Schaltfrequenz 28 auf die erste Schaltfrequenz 36. Sollte bei einem Erreichen der Temperaturschwelle 44 die erste Schaltfrequenz 36 ausgewählt sein, so wird die Schaltfrequenz 28 weiter reduziert. Die Schaltfrequenz 28 wird solange auf einem vergleichsweise kleinen Wert gehalten, bis die Betriebstemperatur 42 des Umrichters 24 wieder unter einen bestimmten Wert gefallen ist, welcher insbesondere unterhalb der Temperaturschwelle 44 liegt. Nachdem dieser Wert erreicht wurde, wird die Schaltfrequenz 28 wieder auf den ursprünglichen Wert gesetzt, also die erste Schaltfrequenz 36 bzw. die zweite Schaltfrequenz 38.

Ist mittels Reduzierung der Schaltfrequenz 28 keine Reduzierung der Betriebstemperatur 42 möglich, beispielsweise aufgrund einer vergleichsweise hohen Umgebungstemperatur des Kraftfahrzeugs 2, so wird der Umrichter 24 abgeschaltet. Auf diese Weise werden Schäden am Umrichter 24 und dem restlichen Kraftfahrzeug 2 vermieden.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

## Patentansprüche

1. Kraftfahrzeug (2), das mit einem Elektromotor (6) angetrieben ist, wobei der Elektromotor (6) mittels eines eine Schaltfrequenz (28) aufweisenden Umrichters (24) betrieben und eine Leistungsabgabe (40) des Umrichters (24) an den Elektromotor (6) mittels eines Pedals (34) gesteuert ist, **gekennzeichnet durch** einen Wahlhebel (32) zur Umschaltung der Schaltfrequenz (28) zwischen einer ersten Schaltfrequenz (36) und einer zweiten Schaltfrequenz (28) mit einer reduzierten Leistungsabgabe (40).

2. Kraftfahrzeug (2) nach Anspruch 1, **dadurch gekennzeichnet, dass** die erste Schaltfrequenz (36) zwischen 3kHz und 5kHz und insbesondere 4kHz beträgt.

3. Kraftfahrzeug (2) nach Anspruch 1 oder 2, **dadurch gekennzeichnet , dass** die zweite Schaltfrequenz (38) zwischen 13kHz und 19kHz und insbesondere 16kHz beträgt.

4. Kraftfahrzeug (2) nach einem der Ansprüche 1 bis 3, **dadurch gekennzeichnet, dass** bei einer Betriebstemperatur (42) des Umrichters (24), die größer als eine Temperaturschwelle (44) ist, die Schaltfrequenz (28) reduziert ist.

5. Kraftfahrzeug (2) nach einem der Ansprüche 1 bis 4, **dadurch gekennzeichnet, dass** der Wahlhebel (32) mit dem Umrichter (24) über ein Bussystem (30) verbunden ist.

6. Kraftfahrzeug (2) nach einem der Ansprüche 1 bis 5, **dadurch gekennzeichnet, dass** mittels des Wahlhebels (32) zusätzlich eine Bewegungsrichtung (16) des Kraftfahrzeugs (2) einstellbar ist.

7. Kraftfahrzeug (2) nach Anspruch 6, **dadurch gekennzeichnet, dass** nur bei einer Vorwärtsfahrt des Kraftfahrzeugs (2) die Schaltfrequenz (28) beeinflussbar ist.
